# EUROPEAN PATENT APPLICATION

(11) **EP 2 120 231 A1**
(43) Date of publication of application: **18.11.2009**
(21) Application number: 07715282.5
(22) Date of filing: 07.03.2007
(51) Int. Cl.: G10L 15/10, G06F 19/00, G10H 1/00, G10K 15/02, G10L 11/00, G10L 15/22, G11B 27/34

(54) **DATA INSPECTING DEVICE AND METHOD**

(71) Applicant: Pioneer Corporation, Tokyo 153-8654 (JP)
(72) Inventor: HORIUCHI, Naoaki, Tsurugashima-shi Saitama 350-2288 (JP); GAYAMA, Shinichi, Tsurugashima-shi Saitama 350-2288 (JP); SONODA, Toshiyuki, Tokyo 153-8654 (JP); NAGASAWA, Hideya, Tokyo 153-8654 (JP); TANAKA, Junichi, Tokyo 153-8654 (JP); TANAKA, Koji, Tokyo 153-8654 (JP)
(74) Representative: Viering, Jentschura & Partner
(86) International application number: PCT/JP2007/054480
(87) International publication number: WO 2008/107986

(57) **Abstract**

A data browsing apparatus (100) displays each of a plurality of data individually indicated as a mark which can be reproduced by a reproducing means (150) and which has a length, so that the data browsing apparatus makes it possible to inspect a plurality of the data. The data browsing apparatus is provided with a calculating means (110) for calculating the degree of mutual relevancy to predetermined kinds of parameters at different length points between one group of data which the reproducing means is reproducing out of a plurality of the data and the other groups of the data except such one group of the data and a display means (120) for displaying the mark indicative of each of the other groups of data corresponding to the point in a different mode of display in accordance with the calculated relevancy. This makes a user recognize more accurately the relevancy of the mutual data.

## Description

### Technical Field

The present invention relates to, for example, a data browsing apparatus for and method of browsing data, in a reproducing apparatus which can record or reproduce a large amount of data, such as an audio apparatus equipped with a HDD (Hard Disc Drive), a DVD, and a BD (Blu-ray Disc).

### Background Art

As this type of data browsing apparatus, in order to present a large amount of recorded data to a user in an easy-to-understand manner, there is an apparatus which visually displays the data on a display or the like.

For example, a patent document 1 discloses such a technology that each of files which constitute the data is expressed by a symbol and that clustering is performed on the basis of the property amount of each file, thereby disposing each file in an information space.

Patent document 1: Japanese Patent Application Laid Open No 2005-10854

### Disclosure of Invention

### Subject to be Solved by the Invention

In the aforementioned technology, however, for example, if the recorded data is data having a length in time, such as music data and motion picture data, the property amount which changes with time is rounded as the property amount of the entire data; namely, the property amount which changes with time cannot be displayed, or the display content cannot be changed with time, which is a technically problematic.

In view of the aforementioned problems, it is therefore an object of the present invention to provide a data browsing apparatus and method which enable a user to recognize the degree of association between data, more accurately.

### Means for Solving the Object

The above object of the present invention can be achieved by a data browsing apparatus capable of browsing a plurality of data by displaying each of the plurality of data as a mark which individually denotes the each of the plurality of data, the each of the plurality of data being able to be reproduced by a reproducing device, the each of the plurality of data having a length, the data browsing apparatus provided with: a calculating device for calculating a degree of association of a predetermined type of parameter, at a point at which the length is different, between one data that is being reproduced by the reproducing device of the plurality of data and other data except the one data of the plurality of data; and a displaying device for displaying the mark which denotes each of the other data in association with the point, in a different aspect according to the calculated degree of association.

According to the data browsing apparatus of the present invention, its operations are performed when one of the plurality of data each having the length is being reproduced by the reproducing data. Incidentally, the "plurality of data each having the length" includes, for example, data having a length in time, such as music data and motion picture data, and data having a length in quantity, and the like. In other words, the "length" herein is a parameter used to define a reproduction position in the reproduction of the data by the reproducing device.

When the one data is reproduced by the reproducing device, the degree of association of the predetermined type of parameter is firstly calculated at the point at which the length is different, between the one data and the other data except the one data. The "predetermined type of parameter" herein indicates a common parameter shared by each of the plurality of data. For example, if the data is music, the parameter indicates various attributes of the music, including being dark/bright, being sad/happy, the degree of healing, the degree of romanticism, and the like. If the data is an image, the parameter includes that the image is related to sea or mountains. Moreover, the "predetermined type" is not limited to one type; one type may be used from among a plurality of types prepared in advance, or a plurality of types may be used simultaneously. Incidentally, the "degree of association" indicates a parameter which denotes association between data, and it is calculated from the predetermined type of parameter at the point at which the length is different. Typically, it is the degree of partial similarity between the data. As data have closer values in the predetermined type of parameter, the degree of association is higher between the data.

Then, the mark that denotes each of the other data that have not been reproduced is associated with the point associated with the data length (hereinafter simply referred to as the point), and the mark is displayed in the different aspect according to the aforementioned degree of association. Incidentally, the "different aspect" may be not only an aspect in which the mark is displayed such that the distance between the mark and an axis varies depending on the degree of association, by using an axis indicating the length, such as a time axis when the data has a length in time, but also an aspect in which the mark is displayed such that the following varies: luminance, brightness, shading, chroma or saturation, flashing on and off, the degree of floating, the degree of hatching, and the like. Moreover, with regard to the plurality of data, all the data may be displayed as the marks, or there may be some data that are not displayed.

Here, in the present invention, in particular, since the degree of association is calculated from the predetermined type of parameter at the point at which the length is different, it is possible to know a difference in the degree of association by the point. Here, if the difference in the degree of association by the point cannot be known, the degree of association is treated with respect to the data as a whole. Thus, for example, even if the data partially have the extremely high degree of association, the degree of association is averaged for all the data, and there is a possibility that the degree of association between the data cannot be recognized accurately.

In the present invention, however, in particular, it is possible to know the difference in the degree of association by the point, as described above. Thus, by knowing how high the degree of partial association by the point is if the data has the length, it is possible to recognize the degree of association between the data, more accurately. For example, in the case of the music data, it is possible to find the data having a similar introduction and the data having a similar chorus (or bridge) to those of the reproducing data, from among a plurality of music data. Moreover, since the data is displayed in the different aspect according to the degree of association as described above, a user can visually recognize the degree of association between the data. Thus, for example, even in the case of the data that is aurally recognized, such as the music data, i.e. the data that originally cannot be visually recognized, it is possible to visually recognize the degree of association. Therefore, it is possible to recognize the degree of association between the data, more intuitively.

As explained above, according to the data browsing apparatus of the present invention, it is possible to recognize the degree of association by the point between the data that is being reproduced and the other data that have not been reproduced.

In one aspect of the data browsing apparatus of the present invention, the calculating device calculates the degree of association at a different time point as the point, and the displaying device displays a time axis with which the one data complies and displays the mark at a display position associated with the time point on the time axis.

According to this aspect, the degree of association between the one data that is being reproduced and the other data is calculated from the predetermined type of parameter at the different point in time. In other words, the "length" of the data here indicates a length in time. Then, the time axis with which the one data complies is displayed, and the mark which denotes each of the other data is displayed at the display position associated with the time point on the time axis. For example, in the case of the music data, the reproduction time of the one data that is being reproduced is displayed as the axis, and each of the marks that denote the other data is displayed at the display position associated with the time point on the axis.

As described above, by calculating the degree of association at the different time point, it is possible to recognize the degree of association of the data, more accurately, with respect to the data having the length in time, such as music data and motion picture data. Moreover, since the time axis with which the one data that is being reproduced complies is displayed, it is possible to visually recognize the length in time of the one data, the reproducing point, or the like. In addition, the other data that have not been reproduced are displayed in association with the time point on the time axis, it is possible to recognize the degree of association of the other data with respect to the one data, in association with the reproducing position of the one data or in association with the reproduced position, or the like. Moreover, in the case of known data, it is possible to predict a portion which will be reproduced, from the reproduction position of the data, thereby recognizing the data with the high degree of association even in a portion that has not been reproduced.

As explained above, according to the data browsing apparatus of the present invention, it is possible to recognize the difference in the degree of association by time between the data that is being reproduced and the other data that have not been reproduced, more correctly.

In an aspect in which the mark is displayed at the display position associated with the time point, as described above, the displaying device may display the mark at the display position which has a different distance from the time axis in accordance with the calculated degree of association

By virtue of such construction, the mark that denotes each of the other data that have not been reproduced is displayed at the display position which has the different distance from the time axis in accordance wit the degree of association. In other words, the degree of association between the one data that is being reproduced and the other data is indicated by the displayed distance in a direction crossing the axis from the time axis. For example, as the other data have the higher degree of association with respect to the one data, the other data that have not been reproduced are displayed at the closer positions to the time axis. Therefore, it is possible to recognize the degree of association, more intuitively, from the display position.

As explained above, according to the data browsing apparatus of the present invention, it is possible to recognize the degree of association between the data that is being reproduced and the other data, more intuitively.

In another aspect of the data browsing apparatus of the present invention, the displaying device displays the mark in association with one or a plurality of points at which the calculated degree of association is high, in each of the other data.

According to this aspect, the mark which denotes each of the other data that have not been reproduced is displayed in association with the one or the plurality of points at which the degree of association is high, and typically, it is displayed in association with one point at which the degree of association is the highest. However, with respect to one data, the mark may be displayed at two or more points, including the point at which the degree of association is the second highest or more.

In recognizing the degree of association, in most cases, it is important to recognize how high the degree of association is. For example, in a case where it is desired to know the data similar to the data that is being reproduced, it is only necessary to know the data with the high degree of association. Thus, by displaying the mark which denotes each of the data in association with the point with the high degree of association, it is possible to recognize the degree of association, more efficiently.

As explained above, according to the data browsing apparatus in this aspect, it is possible to recognize the degree of association between the data that is being reproduced and the other data that have not been reproduced, more efficiently.

In another aspect of the data browsing apparatus of the present invention, it is further provided with a type specifying device which can specify or change the predetermined type when the one data is being reproduced by the reproducing device, the calculating device calculating the degree of association of the specified or changed predetermined type of parameter.

According to this aspect, when the one data is being reproduced, it is possible to specify or change the type of the predetermined type of parameter. Moreover, if the type of the predetermined type of parameter is specified or changed, the degree of association in the specified or changed predetermined type of parameter is calculated.

The predetermined type of parameter may include a plurality of types, as described above; however, for example, when the degree of association is calculated for one predetermined type of parameter, the remaining predetermined types of parameters are not used.

However, there is a conceivable case in which a user of the apparatus desires the degree of association about another predetermined type of parameter in which the degree of association is not calculated. If the type of the predetermined type of parameter cannot be changed in such a case, it is extremely inconvenient.

In this aspect, however, in particular, the type of the predetermined type of parameter is specified or changed, and the degree of association is calculated in the specified or changed predetermined type of parameter. Thus, options are given to the user to select in which of the plurality of predetermined types of parameters the degree of association is calculated. Then, by specifying or selecting the predetermined type of parameter, it is possible to recognize the desired degree of association.

As explained above, according to the data browsing apparatus in this aspect, it preferably enables a user to recognize the degree of association.

In another aspect of the data browsing apparatus of the present invention, the displaying device displays the mark, in such data that the calculated degree of association reaches a predetermined threshold value, of the plurality of data.

According to this aspect, the mark is displayed in such data that the calculated degree of association reaches the predetermined threshold value, of the plurality of data.

In a case where a large amount of data is treated as the plurality of data, if all the data is to be displayed, there is a possibility that the excessive number of data causes difficulty in recognizing the degree of association between the data.

In this aspect, however, in particular, since such a mark is displayed that the degree of association reaches the predetermined threshold value, the number of data to be displayed is limited even if a large amount of data is treated. Thus, it is possible to prevent the occurrence of the situation that the excessive number of data causes difficulty in recognizing the degree of association.

As a result, it is possible to recognize the degree of association from the data to be displayed, more accurately.

In another aspect of the data browsing apparatus of the present invention, it is further provided with a range specifying device which can specify or change at least one of a range associated with the length and a range associated with the degree of association.

According to this aspect, at least one of the range associated with the length and the range associated with the degree of association can be specified or changed, and the ranges are changed, for example, automatically or manually by a user.

If only the range set in advance can be displayed, for example, a situation that there is no data included in the range or a situation that there is too much data included in the data likely occurs. Moreover, it is hardly possible to display the data out of the set range.

In this aspect, however, in particular, the displayed range is variable, so that it is possible to set and display a range to be newly displayed, if the appropriate display result is not obtained as described above or in similar cases. Thus, it is possible to set the data to be displayed, to be more appropriate data.

As explained above, according to the data browsing apparatus in this aspect, it is possible to display the data, more appropriately, on the displaying device.

In an aspect of the data browsing apparatus of the present invention, it is further provided with an external operation selecting device which can select the mark corresponding to the data to be reproduced next by the reproducing device, of the marks displayed by the displaying device, by an external operation.

According to this aspect, of the displayed marks, the mark corresponding to the data to be reproduced next by the reproducing device can be selected by the external operation. In other words, a user of the apparatus can select the data the user would like to reproduce, from among the data displayed as the marks.

In this aspect, in particular, by selecting the data the user would like to reproduce from among the data displayed as the marks, the data selected by the user is reproduced next to the data that is being reproduced. Thus, the user can select the data the user would like to reproduce. Moreover, since the displayed data is displayed in association with the degree of association with the data that is being reproduced, it is possible to select the data after recognizing the degree of association with the data that is being reproduced.

As explained above, according to the data browsing apparatus in this aspect, a user can preferably select the data to be reproduced.

In an aspect in which the external operation selecting device is further provided, as described above, it may be further provided with a change controlling device for controlling the reproducing device to change the one data to the data corresponding to the selected mark at the point with the high degree of association and to reproduce it.

By virtue of such construction, the reproducing device is controlled to change the one data that is being reproduced to the data corresponding to the mark selected by the external operation selecting deice, at the point with the high degree of association and to reproduce it. In other words, if the one data that is being reproduced is reproduced until the position with the high degree of association with the selected data, the data corresponding to the selected mark is reproduced from the position with the high degree of association with the data that is being reproduced, instead of the one data that is being reproduced.

Here, in this aspect, in particular, the change between the data that is being reproduced and data candidate data is performed at the position with the high degree of association, so the change is more natural. For example, if the music data is being reproduced, the data that is being reproduced is changed to the selected data at a position in which brightness of music, tempo, chord, or the like is similar. Thus, the data that is being reproduced is changed to the selected data as if a user were listening to the same music. Therefore, the user can listen to the music without aware of the change of the music data.

As explained above, according to the data browsing apparatus in this aspect, it is possible to continuously reproduce the data without making a user aware of the data change.

In an aspect of the data browsing apparatus of the present invention, it is further provided with: an automatically-selecting device for automatically selecting the data that has the highest calculated degree of association, of the plurality of data whose respective marks are displayed, as the mark corresponding to the data to be reproduced next by the reproducing device; and an external operation confirming device which can confirm the selected data that has the highest degree of association, as the mark corresponding to the data to be reproduced next by the reproducing device, by an external operation.

According to this aspect, the data that has the highest calculated degree of association, of the plurality of data whose respective marks are displayed, is automatically selected as the mark corresponding to the data to be reproduced next by the reproducing device. Thus, the reproducing device continuously reproduces the data which have the high degree of association with each other. In other words, even if a user does not perform any operation, the data with the high degree of association is automatically selected and reproduced.

Moreover, in this aspect, the selected data that has the highest degree of association can be confirmed as the mark corresponding to the data to be reproduced next by the reproducing device, by the external operation. In other words, before the selected data that has the high degree of association is reproduced, it is possible to perform the confirmation by a user on the selected data. The aforementioned selection by the automatically-selecting deice is not always suitable for the user, and the user may want to reproduce the data other than the selected user in some cases.

In this aspect, however, in particular, as described above, the user can confirm the data to be reproduced next by the external operation. In other words, it is possible to reproduce the data different from the data selected by the operation. Therefore, the data to be reproduced next can be regarded as the more suitable data for the user.

As explained above, according to the data browsing apparatus in this aspect, it is possible to reproduce the data by partially reflecting the user's will, in addition to the automatic selection of the data to be reproduced.

In an aspect in which the automatically-selecting device ad the external operation confirming device are provided, as described above, it may be further provided with a change controlling device for controlling the reproducing device to change the one data to the data corresponding to the confirmed mark at the point with the high degree of association and to reproduce it.

By virtue of such construction, the reproducing device is controlled to be changed from the one data that is being reproduced to the data corresponding to the mark confirmed by the external operation confirming device at the point with the high degree of association and to be reproduced. In other words, when the one data that is being reproduced is reproduced up to the position with the high degree of association with the confirmed data, the data corresponding to the confirmed mark is reproduced from the position with the high degree of association with the data that is being reproduced.

In this aspect, in particular, the change between the data that is being reproduced and the reproduction candidate data is performed at the position with the high degree of association, so the change is more natural. Therefore, it is possible to continuously reproduce the data without making a user aware of the data change.

The above object of the present invention can be achieved by a data browsing method capable of browsing a plurality of data by displaying each of the plurality of data as a mark which individually denotes the each of the plurality of data, the each of the plurality of data being able to be reproduced by a reproducing device, the each of the plurality of data having a length, the data browsing method provided with: a calculating process of calculating a degree of association of a predetermined type of parameter, at a point at which the length is different, between one data that is being reproduced by the reproducing device of the plurality of data and other data except the one data of the plurality of data; and a displaying process of displaying the mark which denotes each of the other data in different aspects in accordance with the calculated degree of association, in association with the point.

According to the data browsing method of the present invention, the degree of association of the predetermined type of parameter is calculated at the point at which the length is different, between the one data that is being reproduced by the reproducing device of the plurality of data and the other data except the one data of the plurality of data. Then, the mark which denotes each of the other data is displayed in different aspects in accordance with the calculated degree of association, in association with the point associated with the length.

In the present invention, in particular, since the degree of association is calculated from the predetermined type of parameter at the point at which the length is different, it is possible to know the difference in the degree of association by the point. Thus, it is possible to recognize the degree of association between the data, more accurately.

Moreover, since the data is displayed in different aspects in accordance with the degree of association, a user can visually recognize the degree of association between the data. Therefore, it is possible to recognize the degree of association between the data, more intuitively.

As explained above, according to the data browsing method of the present invention, it is possible to recognize the degree of association by the point between the data that is being reproduced and the other data that have not been reproduced, more accurately.

Incidentally, even the data browsing method of the present invention can adopt the same various aspects as those of the data browsing apparatus of the present invention.

The operation and other advantages of the present invention will become more apparent from the Best Mode for Carrying Out the Invention described below.

### Brief Description of Drawings

[FIG. 1] FIG. 1 is a block diagram showing the structure of a data browsing apparatus in a first embodiment.
[FIG. 2] FIG. 2 is a plan view showing one example of a screen of a display device in the first embodiment.
[FIG. 3] FIG. 3 is a plan view (part 1) showing one example of a screen of a display device in a second embodiment.
[FIG. 4] FIG. 4 is a plan view (part 2) showing one example of the screen of the display device in the second embodiment.
[FIG. 5] FIG. 5 is a plan view showing one example of a screen of a display device in a third embodiment.
[FIG. 6] FIG. 6 is a conceptual view showing a display position of music data in the third embodiment.

### Description of Reference Codes

- 100: data browsing apparatus
- 110: controller
- 120: display device
- 130: input device
- 150: reproduction device
- 160: storage device
- 210, 310, 410: mark (which is being reproduced)
- 220 to 260, 310 to 370, 420 to 460: mark
- 500: bar
- 510: reproduction bar

### Best Mode for Carrying Out the Invention

Hereinafter, embodiments of the present invention will be described with reference to the drawings. In the embodiments below, a case where the data browsing apparatus of the present invention is used for an audio apparatus provided with a large-capacity recording apparatus will be exemplified and explained.

### <First Embodiment>

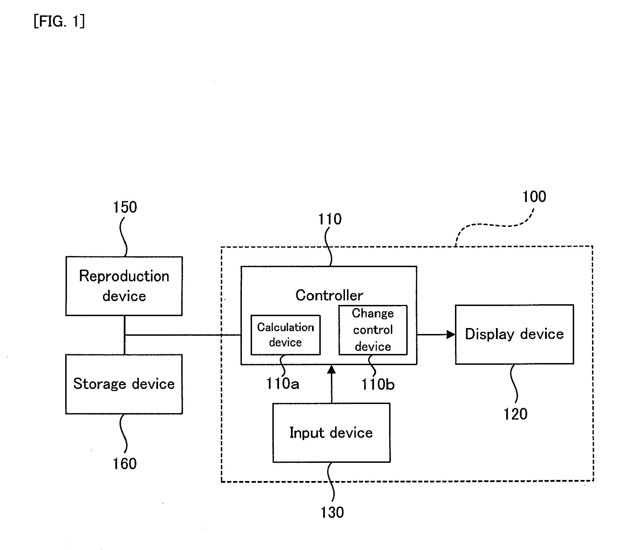

Firstly, the structure of a data browsing apparatus in this embodiment will be described with reference to FIG. 1. FIG. 1 is a block diagram showing the structure of a data browsing apparatus in a first embodiment.

As shown in FIG. 1, a data browsing apparatus 100 in the embodiment is provided with a controller 110, including a calculation device 110a which is one example of the "calculating device" and a change control device 110b which is one example of the "change controlling device" of the present invention; a display device 120 which is one example of the "displaying device" of the present invention; and an input device 130 which is one example of the "type specifying device" and the "external operation selecting device" of the present invention.

The controller 110 includes, for example, an arithmetic circuit, a memory, and the like. The controller 110 performs an arithmetic process or the like on inputted information, and it outputs the result. Incidentally, the controller 110 is also connected to a reproduction device 150 for reproducing music data and a storage device 160 for storing the music data, which are outside the data browsing apparatus 100, and the controller 110 controls each of them.

The display device 120 includes, for example, a liquid crystal, a LED, and the like. The display device 120 displays information on its screen, as characters, symbols, drawings, and the like.

The input device 130 includes an inputting device, such as a button and a switch, which allows an input by a user. The input device 130 outputs the inputted information to another circuit or the like, as an electric signal. Moreover, an inputting method can adopt various forms; for example, the input device may be unified with the aforementioned display device 120, and it may be a touch panel or the like in which the user touches the screen to perform an input operation.

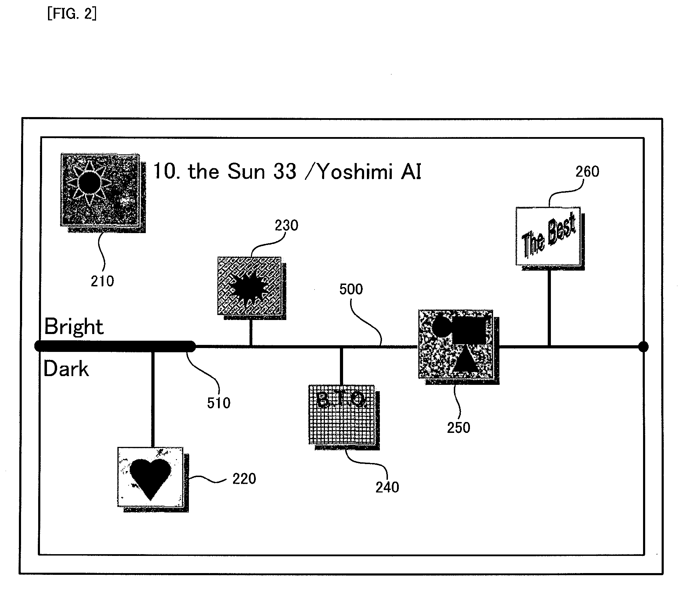

Next, the operation and effect of the data browsing apparatus in the embodiment will be described with reference to FIG. 2 in addition to FIG. 1.
FIG. 2 is a plan view showing one example of the screen of the display device in the first embodiment.

As shown in FIG. 2, in the operation of the data browsing apparatus 100 in the embodiment, a mark 210, a music number (i.e. "10" in FIG. 2), a music title ("the Sun 33" in FIG. 2), an artist name (i.e. "Yoshimi AI" in FIG. 2), and a bar 500 extending in a horizontal direction and indicating a music length and a reproduction position are displayed on the display device 120, all of which correspond to the data that is being reproduced by the reproduction device 150 (hereinafter referred to as reproducing data, as occasion demands) of the music data stored in the storage device 160. Incidentally, the bar 500 shows until which the music is reproduced, by using a reproduction bar (i.e. a thick portion of the bar) 510, with the left edge at a starting point. In other words, the right edge of the reproduction bar 510 is a position at which the reproduction is being performed, and the reproduction bar 510 extends from left to right as the reproducing time elapses.

In the embodiment, in particular, marks 220, 230, 240, 250, and 260 are displayed which have the high degree of association with the reproducing data and which denote several music data. For example, here, the calculation device 110a in the controller 110 calculates the degree of association for each music data from a parameter which indicates the brightness (or cheerfulness) of the music (e.g. a chord progression or the like) and displays five music data in descending order from the highest degree of association. Incidentally, the mark that denotes brighter (or more cheerful) music data than the reproducing data is displayed above the bar 500, and the mark that denotes darker (or less cheerful) music data is displayed below the bar 500. Moreover, the mark that denotes the music data including the mark 210 indicating the data that is being reproduced is desirably something that enables a user to easily judge what type of music it is (i.e. something that allows the song to be imaged from the mark); for example, a jacket image of a CD in which the music is recorded or the like is used.

The parameter used for the calculation of the degree of association described above can be also changed by a user's input from the input device 130. For example, if a user selects another parameter which is different from the parameter currently selected by the user, the calculation device 110a in the controller 110 calculates a new degree of association from the selected parameter, and the display device 120 displays the mark that denotes the music data according to the degree of association newly calculated. As described above, the user can recognize the desired degree of association, by selecting the parameter.

Of the marks displayed on the display device 120, each of the marks 220, 230, 240, and 260 is connected to the bar 500 with a line crossing the bar 500 in a perpendicular direction. This indicates with which portion of the reproducing data the music data denoted by each mark has the highest degree of association, and the connecting portion between the bar 500 and the line is a position with the highest degree of association. For example, it indicates that the music data denoted by the mark 220 and the reproducing data have the highest degree of association in the already reproduced portion.
On the other hand, it indicates that the music data denoted by the mark 260 has the highest degree of association in the latter half of the reproducing data.

Moreover, with regard to the line connecting the bar 500 and each of the marks 220, 230, 240, and 260, its length also indicates how high the degree of association with the reproducing data is. Here, it indicates that as the line is shorter, the music data denoted by the mark connected with the line and the reproducing data have the higher degree of association. In other words, it indicates that the music data denoted by the mark 230 has the higher degree of association than the music data denoted by the mark 220. Thus, a user can recognize the degree of association between the data, more accurately.

The music data denoted by the mark 250 is displayed above the bar 500, which means that the music data denoted by the mark 250 is the music data to be reproduced next to the reproducing data (hereinafter referred to as reproduction candidate data, as occasion demands). Moreover, the position at which the mark 250 is displayed indicates a changing position at which it is changed from the reproducing data to the music data denoted by the mark 250. In other words, when the reproduction bar 510 comes to the position of the mark 250, the music data denoted by the mark 250 is reproduced instead of the reproducing data.

Moreover, the music data denoted by the mark 250 is reproduced from the position with the highest degree of association with the reproducing data.
Thus, the music data denoted by the mark 250 is also possibly reproduced from the middle of the music. As described above, the music is changed so that the two music pieces are connected, by changing and reproducing the music at the position with the highest degree of association. Therefore, without making a user aware of the data change, it is possible to continuously reproduce the data. Moreover, by providing fade-out and fade-in (i.e. cross-fading) to each music, it is possible to change it so that the two music pieces are naturally connected. Incidentally, the aforementioned change in the music data is performed by the change control device 110b in the controller 110.

As explained above, according to the data browsing apparatus in the embodiment, it is possible to recognize the degree of association between the data, more accurately. Thus, for example, it is possible to easily access the desired data.

### <Second Embodiment>

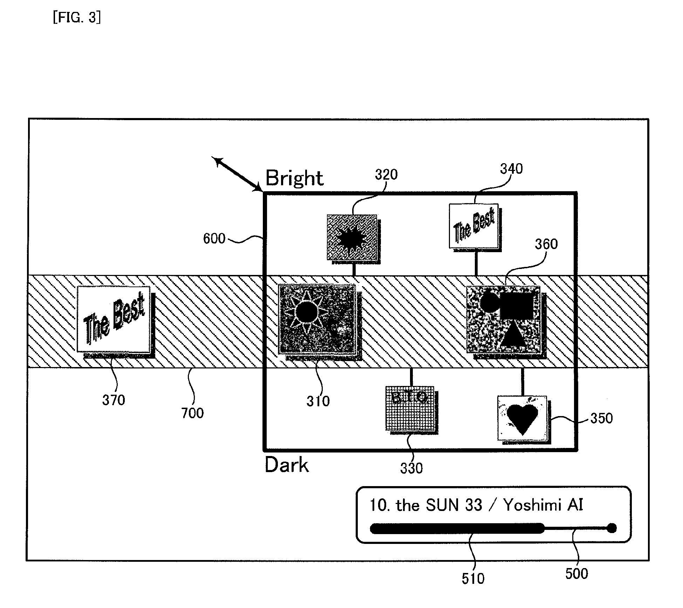

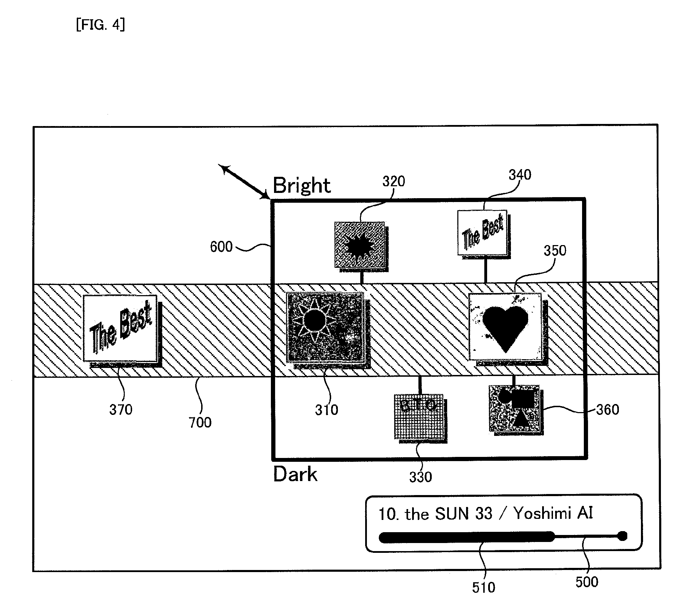

Next, a data browsing apparatus in a second embodiment will be described with reference to FIG. 3 and FIG. 4 in addition to FIG. 1. Each of FIG. 3 and FIG. 4 is a plan view showing one example of a screen of a display device in the second embodiment. Incidentally, the second embodiment differs from the aforementioned first embodiment in one portion of the operations, and the other operations and structure are the same. Thus, the structure of the apparatus and the operations and effect that repeat those of the first embodiment will be omitted, as occasion demands.

As shown in FIG. 3, in the operation of the data browsing apparatus 100 in the second embodiment, a mark 310 which denotes the data that is being reproduced (or the reproducing data) by the reproduction device 150, marks 320, 330, 340, and 350 which denote the music data which have the high degree of association with the reproducing data, a mark 360 that denotes the reproduction candidate data, and a mark 370 which denotes the music data that is reproduced before the reproducing data (hereinafter referred to as reproduced data, as occasion demands) of the music data stored in the storage device 160 are displayed on the display device 120. Moreover, in order to define the display positions of the marks 310, 360, and 370 which denote the reproducing data, the reproduction candidate data, and the reproduced data (i.e. the data treated by the reproduction device 150), respectively, a strip-like area 700 extending in the horizontal direction is displayed near the center of the screen. Then, the calculation device 110a in the controller 110 calculates the degree of association by using the brightness of the music The music data that is brighter than the reproducing data is displayed above the area 700, and the darker music data is displayed below the area 700. Incidentally, the bar 500 indicating the music length and the reproduction position is displayed with the music number, the music title, and the artist name, in the lower right corner of the screen.

In the embodiment, in particular, a display frame 600 is displayed in order to show a threshold value associated with the degree of association for determining the music data to be displayed, and the marks 320, 330, 340, and 350 which denote the music data which have the high degree of association with the reproducing data are displayed within the display frame 600. Incidentally, although the music data denoted by the marks 340 and 370 are the same, the reproduced data may not be displayed as the data with the high degree of association.

In the display frame 600, the width in the vertical direction indicates the threshold value of the degree of association. The width of the threshold value can be changed by a user operating the input device 130 which is one example of the "range specifying device" of the present invention and by the user changing the width in the vertical direction of the frame. By this, it is possible to increase or reduce the number of the marks displayed within the display frame 600. For example, if the width in the vertical direction is reduced, the width of the threshold value is reduced, and only the mark with the high degree of association is displayed. On the other hand, if the width in the vertical direction is increased, the width of the threshold value is increased, which allows the mark with the low degree of association to be displayed.

Moreover, the width in the horizontal direction of the display frame 600 indicates the music length of the reproducing data; namely the left edge of the display frame 600 indicates a stating position of the music, and the right edge indicates an end position of the music. Thus, even without using the bar 500 as in the first embodiment, it is possible to show a position with the highest degree of association with the reproducing data. Incidentally, if the width in the horizontal direction of the display frame 600 is set to be variable by the operation of the input device 130, it is also possible to display the music data that has the high degree of association with the reproduced data or the reproduction candidate data.

As explained above, by using the display frame 600, a user can arbitrarily determine the width of the degree of association to be displayed. In other words, the user can access the desired data, more easily, from among a large amount of music data.

In the embodiment, moreover, the reproduction candidate data can be changed to another music data in which the mark is displayed. In the embodiment, the controller 110 which is one example of the "automatically-selecting device" of the present invention displays the music data that has the highest degree of association with the reproducing data, at the position of the mark 360 in FIG. 3, as the reproduction candidate data. At this time, if a user would like to reproduce another music data, the user operates the input device 130 which is one example of the "external operation confirming device" of the present invention, thereby selecting the data that is desired to be the reproduction candidate data, from among the music data in which the mark is displayed.

As shown in FIG. 4, for example, if the music data denoted by the mark 340 in FIG. 3 is selected, the selected data is the reproduction candidate data, and the mark 340 is displayed within the area 700. On the other hand, the mark 360 is no longer the reproduction candidate data, so that the mark 360 is displayed at a position corresponding to the degree of association and the position with the high degree of association, as in the marks 320, 330, and 340 which are the other music data with the high degree of association.

As explained above, according to the data browsing apparatus in the embodiment, a user can arbitrarily select the data the user would like to reproduce.

### <Third Embodiment>

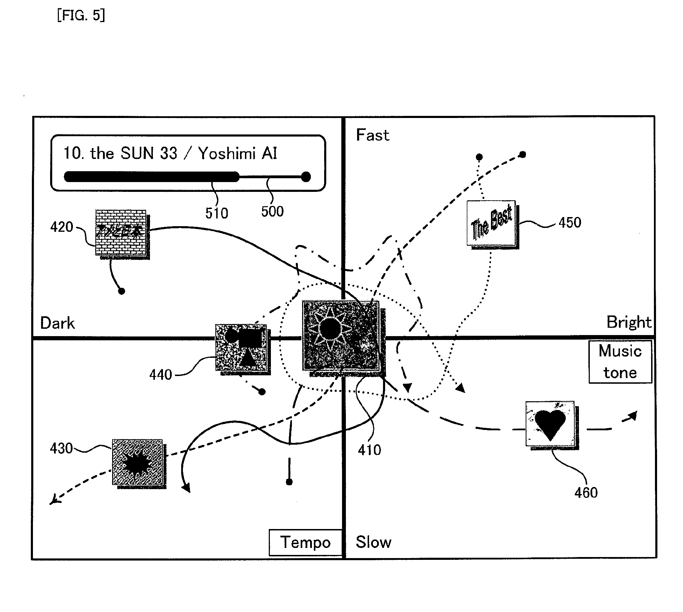

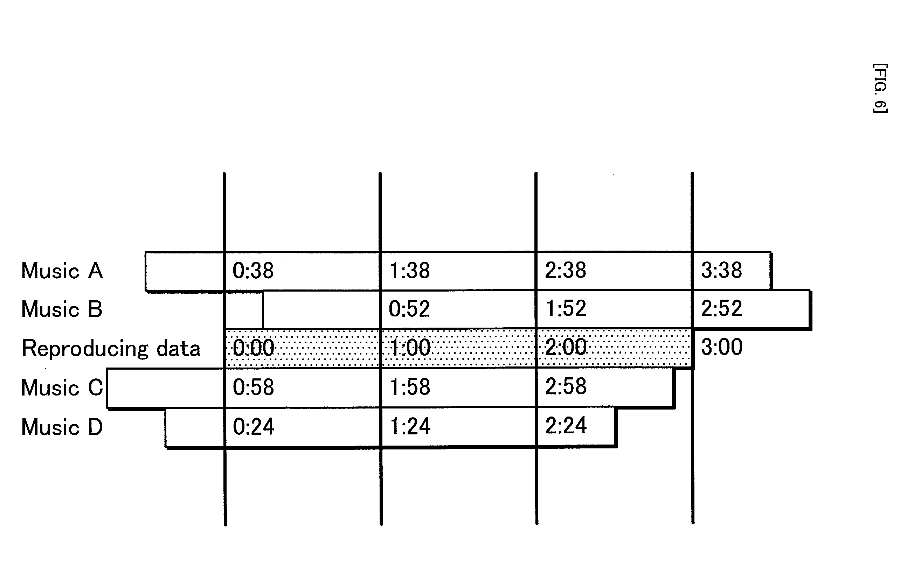

Next, a data browsing apparatus in a third embodiment will be described with reference to FIG. 5 and FIG. 6 in addition to FIG. 1. FIG. 5 is a plan view showing one example of a screen of a display device in the third embodiment. FIG. 6 is a conceptual view showing a display position of music data in the third embodiment. Incidentally, the third embodiment differs from the aforementioned first and second embodiments in one portion of the operations, and the other operations and structure are the same. Thus, the structure of the apparatus and the operations and effect that repeat the first and second embodiments will be omitted, as occasion demands.

As shown in FIG. 5, in the operation of the data browsing apparatus 100 in the third embodiment, a mark 410 which denotes the data that is being reproduced (or the reproducing data) by the reproduction device 150 and marks 420, 430, 440, 450, and 460 which denote the music data that have the high degree of association with the reproducing data of the music data stored in the storage device 160 are displayed on the display device 120. Moreover, the reproduction candidate data in the embodiment is presented to a user, for example, by high-lighting the mark or the like.

In the embodiment, in particular, the degree of association with the data that is being reproduced is calculated in terms of a tempo speed in addition to the brightness, and two types of degrees of associations are two-dimensionally displayed. In other words, with respect to the reproducing data displayed at the center, the brighter music data is displayed on the right side of the screen, the darker music data is displayed on the left side of the screen, the faster-tempo music data is displayed on the upper side of the screen, and the slower-tempo music data is displayed on the lower side of the screen. Incidentally, the music data that is displayed closer to the center has the higher degree of association with respect to the reproducing data. Moreover, two or more types of degrees of association may be used. For example, if three types of degrees of association are used, a three-dimension is displayed virtually on a two-dimensional screen.

Moreover, in the embodiment, in order to show the degree of association which changes with time, the degree of association per unit time (e.g. per second) of each of the music data that have the high degree of association is displayed as a curve. In other words, for each music data, the degree of association related to a portion that is being reproduced of the reproducing data is calculated in each time, is plotted and connected with a curve, thus being displayed. Incidentally, this curve corresponds to the portion that is being reproduced of the reproducing data, so that the curve changes its shape in accordance with the reproduction position during the reproduction.

By using this curve, it is possible to know the change in the degree of association by time of each of the music data that have the high degree of association. For example, it can be seen that the music data denoted by the mark 440 is always close to the portion that is being reproduced of the reproducing data, in both a music tone and a tempo. Thus, if the reproducing data is already known for a user, the user can grasp a rough image of the displayed music data that have the high degree of association.

Incidentally, each of the marks 420, 430, 440, 450, and 460 which denote the music data that have the high degree of association is displaced on the curve in accordance with the reproduction position of the reproducing data.

As shown in FIG. 6, it is assumed that there are four music pieces (music A, music B, music C, and music D) of the music data that have the high degree of association with the reproducing data whose total reproduction time is 3 minutes. Here, each music data has a different point at which it is highly associated with the reproducing data. If the music pieces are arranged on the basis of the point with the highest association, the arrangement is as shown in FIG. 6. The position of each of the marks 420, 430, 440, 450, and 460 is displayed on the basis of the concept in FIG. 6. For example, if the reproducing data is reproduced at a position of "1:00", the mark that denotes the music A is displayed at a position of "1:38" on a curve that denotes the music A. The mark that denotes the music B is displayed at a position of "0:52" on a curve that denotes the music B.

As explained above, according to the data browsing apparatus in the embodiment, it is possible to recognize the change in the degree of association by time, more intuitively.

The present invention can be applied not only to the audio apparatus for reproducing the music data as explained in the aforementioned embodiments but also to a multimedia apparatus for reproducing motion pictures and images, a text browsing apparatus for displaying text data, and an application operated on a personal computer or the like.

The present invention is not limited to the aforementioned example, but various changes may be made, if desired, without departing from the essence or spirit of the invention which can be read from the claims and the entire specification. A data browsing apparatus and method, all of which involve such changes, are also intended to be within the technical scope of the present invention.

### Industrial Applicability

The data browsing apparatus and method of the present invention can be used for a reproducing apparatus or the like which can record or reproduce a large amount of data, such as an audio apparatus equipped with a HDD (Hard Disc Drive), a DVD, and a BD (Blu-ray Disc).

## Claims

1. A data browsing apparatus capable of browsing a plurality of data by displaying each of the plurality of data as a mark which individually denotes the each of the plurality of data, the each of the plurality of data being able to be reproduced by a reproducing device, the each of the plurality of data having a length, said data browsing apparatus comprising:
a calculating device for calculating a degree of association of a predetermined type of parameter, at a point at which the length is different, between one data that is being reproduced by said reproducing device of the plurality of data and other data except the one data of the plurality of data; and
a displaying device for displaying the mark which denotes each of the other data in association with the point" in a different aspect according to the calculated degree of association.

2. The data browsing apparatus according to claim 1, wherein
said calculating device calculates the degree of association at a different time point as the point, and
said displaying device displays a time axis with which the one data complies and displays the mark at a display position associated with the time point on the time axis.

3. The data browsing apparatus according to claim 2, wherein said displaying device displays the mark at the display position which has a different distance from the time axis in accordance with the calculated degree of association.

4. The data browsing apparatus according to claim 1, wherein said displaying device displays the mark in association with one or a plurality of points at which the calculated degree of association is high, in each of the other data.

5. The data browsing apparatus according to claim 1, further comprising a type specifying device which can specify or change the predetermined type when the one data is being reproduced by said reproducing device,
said calculating device calculating the degree of association of the specified or changed predetermined type of parameter.

6. The data browsing apparatus according to claim 1, wherein said displaying device displays the mark, in such data that the calculated degree of association reaches a predetermined threshold value, of the plurality of data.

7. The data browsing apparatus according to claim 1, further comprising a range specifying device which can specify or change at least one of a range associated with the length and a range associated with the degree of association.

8. The data browsing apparatus according to claim 1, further comprising an external operation selecting device which can select the mark corresponding to the data to be reproduced next by said reproducing device, of the marks displayed by said displaying device, by an external operation.

9. The data browsing apparatus according to claim 8, further comprising a change controlling device for controlling said reproducing device to change the one data to the data corresponding to the selected mark at the point with the high degree of association and to reproduce it.

10. The data browsing apparatus according to claim 8, further comprising:
an automatically-selecting device for automatically selecting the data that has the highest calculated degree of association, of the plurality of data whose respective marks are displayed, as the mark corresponding to the data to be reproduced next by said reproducing device; and
an external operation confirming device which can confirm the selected data that has the highest degree of association, as the mark corresponding to the data to be reproduced next by said reproducing device, by an external operation.

11. The data browsing apparatus according to claim 10, further comprising a change controlling device for controlling said reproducing device to change the one data to the data corresponding to the confirmed mark at the point with the high degree of association and to reproduce it.

12. A data browsing method capable of browsing a plurality of data by displaying each of the plurality of data as a mark which individually denotes the each of the plurality of data, the each of the plurality of data being able to be reproduced by a reproducing device, the each of the plurality of data having a length, said data browsing method comprising:
a calculating process of calculating a degree of association of a predetermined type of parameter, at a point at which the length is different, between one data that is being reproduced by said reproducing device of the plurality of data and other data except the one data of the plurality of data; and
a displaying process of displaying the mark which denotes each of the other data in association with the point, in a different aspect according to the calculated degree of association.
